# EUROPEAN PATENT SPECIFICATION

(11) **EP 1 209 071 B1**
(45) Date of publication and mention of the grant of the patent: **30.05.2007**
(21) Application number: 01124611.3
(22) Date of filing: 15.10.2001
(51) Int. Cl.: B62K 23/06, B62L 3/02, B62K 15/00, B62M 23/02

(54) **Handle lever of bicycle**
Fahrradhandhebel
Levier à main pour bicyclette

(30) Priority: 21.11.2000 JP 2000354267
(43) Date of publication of application: 29.05.2002
(73) Proprietor: HONDA GIKEN KOGYO KABUSHIKI KAISHA, Minato-ku, Tokyo (JP)
(72) Inventor: Nagura, Hidenori, Wako-shi, Saitama (JP); Iseno, Mitsuru, Wako-shi, Saitama (JP); Shimmura, Hiroyuki, Wako-shi, Saitama (JP)
(74) Representative: Liska, Horst

(56) References cited:
- EP-A- 0 893 337
- DE-A- 3 724 427
- DE-A- 19 736 688
- FR-A- 2 628 054
- US-A- 6 035 742

## Description

The present invention relates to a bicycle, and particularly to a bicycle having a handle which can make it easy to divide a vehicle body frame in the case where the vehicle body frame can be divided into front and rear portions.

Specifically, the present invention relates to a bicycle according to the preamble part of claim 1 and claim 4, respectively.

A motor-assisted bicycle which comprises a human driving system for transmitting a tread force applied to pedals to a rear wheel and a motor driving system capable of adding auxiliary power to the human driving system according to the tread force has been known. For example, Japanese Patent Laid-open No. Hei 10-45081 discloses a motor-assisted bicycle in which a vehicle body frame divided into front and rear portions can be assembled with bolts or connected by a hinge.

Where a motor-assisted bicycle is divided into front and rear portions as mentioned above, there is the following generic problem. An operating portion for a rear brake and an operating portion for a speed change gear are provided in a front portion of a vehicle body, and mechanism portions of the rear brake and the speed change gear are provided in a rear portion of the vehicle, namely, on the rear wheel or in the vicinity of the rear wheel. The operating portions and the mechanism portions are connected by a rear brake wire and a speed change gear wire. Namely, the vehicle body rear portion and the vehicle body front portion are connected by these wires, so that when the vehicle body frame is separated, there is the inconvenience that in order to transport the separated vehicle body frames, the separated vehicle body frames must be moved as one body.

In order to dissolve the inconvenience, it may be contemplated to divide the wires and connect them through, for example, a joint using screws. In that case, however, a play may be generated at the joint portion, or structure may be complicated in order to ensure that connection of the joint is not forgotten.

It is an object of the present invention as disclosed in independent claims 1 and 4, to provide a bicycle in which a handle and an operating body can be fitted to and detached from each other easily, which use of the bicycle in an incomplete assembling condition of the operating body can be prevented and the safety of operation of the bicycle can be enhanced.

Document DE-A-197 36 688 discloses a bicycle according to the preamble part of claim 1 and 4. The generic bicycle comprises a handle and an operating body fittable to and detachable from a tip end of the handle. The operating body is positioned at a normal-use position by engaging a projection of the handle with longitudinal and circumferential engaging grooves of the operating body. Further, a clamp means including a cam mechanism portion are provided for fastening and fixing said operating body to said handle. In the known bicycle the difference in the relative angle of the operating body with respect to the handle, between a normal-use position and a mounting position is relatively small.

Further, document EP-A-0 893 337 discloses an operating body that can be fitted to and detached from a handle via a clamp means that comprises split halves openably and closably coupled to each other by a hinge and an opening portion located on the opposite side of said hinge portion and fastened by a cam mechanism portion. The operating body according to EP-A-0 893 337 can be mounted to a handle bar of a bicycle in various correct as well as incorrect mounting positions.

For illustration of further background art, reference can further be made to documents DE-A-37 24 427 and US-A-6 035 742, disclosing operating bodies that can be fitted to and detached from a handle of a bicycle by inserting a part of the operating bodies into tubular end portions of the handles. Moreover, document FR-A-2 628 054 discloses a collapsible bicycle comprising manually operable brake and shift levers.

In order to attain the above object, the present invention provides a bicycle according to independent claims 1 and 4. In such a bicycle there are provided an operating body comprising an operating lever fitted to a handle, and a wire operated by the operating lever; a clamp means fastening and fixing the operating body to the handle; a cam mechanism portion for opening and closing the clamp means; and a positioning means provided in the clamp means so as to position the operating body at a normal-use position. According to a feature of the invention, the clamp means can be easily fitted to and detached from the handle by the cam mechanism portion. Particularly, the operating body can be easily positioned at the normal-use position by the positioning means.

In an embodiment of the present invention the clamp means is constituted to be fittable and detachable in the longitudinal direction of the handle, at a position where the clamp means is turned by the predetermined angle from the normal-use position of the operating body in the circumferential direction of the handle. According to this embodiment, at the fitting and detaching position of the clamp means, the operating body is staggered from the normal-use position by the predetermined angle, so that incomplete fitted condition can be easily recognized on an appearance basis.

In a further embodiment of the present invention the clamp means comprises a sleeve fitted over the handle, and the cam mechanism portion and a handle grip is integrated with the sleeve. According to this embodiment, the handle grip can be fitted to and detached from the handle as one body with the clamp means.

The objet of the present invention is solved by a bicycle of independent claim 4. In this bicycle, according to the invention, the clamp means comprises split halves openably and closably coupled to each other by a hinge, and an opening portion located on the opposite side of the hinge portion is fastened by the cam mechanism portion, whereby the clamp means is fixed to the handle. According to the invention, the clamp means constituted to be openable and closable at the hinge portion can be fastened and unfastened by the cam mechanism portion provided on the opposite side of the hinge portion, so that the operating body can be easily fitted to and detached from the handle.

In a preferred embodiment of the present invention according to claim 1 or claim 4, the vehicle body frame comprises a front frame on which the handle is provided, and a rear frame on which a rear wheel is provided; the front frame and the rear frame are separatably connected to each other; and the wire is either one of a wire for operating a rear brake fitted to the rear frame and a speed change gear wire. Therefore, when the vehicle body frame is separated into front and rear portions or when the separated vehicle body frames are coupled to each other, the operating body connected to the rear frame by the wire can be easily fitted to and detached from the handle.

As is clear from the above description, according to the inventions as set forth in claims 1 to 5, operating bodies for a rear brake and a speed change gear can be fitted to and detached from a handle in a stroke by a cam mechanism portion. Particularly, according to the invention as set forth in claim 1 and claim 4, under an incomplete fitting condition the operating body is not located in a normal-use position, so that the incomplete fitting condition can be easily recognized from the appearance.

Besides, according to the embodiment of the invention as set forth in claim 5, when the vehicle body frame is separated, the wires are also inclusively separated, so that the separated parts can be easily transported. Particularly, since the wires are not cut apart, generation of a "play" at a connecting portion can be avoided.

Now, one embodiment of the present invention will be described referring to the drawings.
Fig. 1 is a side view of a motor-assisted bicycle according to one embodiment of the present invention.
Fig. 2 is a perspective view from the left front side of a rear frame.
Fig. 3 is a plan view of the rear frame.
Fig. 4 is a side view of a major part of an assist unit.
Fig. 5 is a sectional view taken along A-A of Fig. 4.
Fig. 6 is a sectional plan view of an end block provided on a front frame.
Fig. 7 is a front view of the end block provided on the front frame.
Fig. 8 is a sectional plan view of a modified embodiment of the end block.
Fig. 9 is a front view of the modified embodiment of the end block.
Fig. 10 is a perspective view of a major part as viewed from the right rear side of a motor-assisted bicycle.
Fig. 11 is a perspective view of a major part as viewed from the right rear side of the motor-assisted bicycle.
Fig. 12 is a perspective view of a major part as viewed from the right lower rear side of the motor-assisted bicycle.
Fig. 13 is a perspective view of a left handle portion.
Fig. 14 is an exploded perspective view of the left handle portion.
Fig. 15 is a sectional view showing a tight hold mode of wires.
Fig. 16 is a front view of a fastening member.
Fig. 17 is a side view of the fastening member.
Fig. 18 is a figure showing a major part of a handle.
Fig. 19 is a sectional view taken along C-C of Fig. 18.
Fig. 20 is a perspective view of a handle assembly according to a first modified embodiment.
Fig. 21 is a sectional view of the handle assembly according to the first modified embodiment.
Fig. 22 is a perspective view of a handle assembly according to a second modified embodiment.
Fig. 23 is a sectional view of the handle assembly according to the second modified embodiment.
Fig. 24 is a sectional view showing a lock means of a clamp.
Fig. 25 is an exploded perspective view of a left handle portion.
Fig. 26 is a side view of a separated vehicle body rear portion.
Fig. 27 is a perspective view of a major part of a vehicle body rear portion including a handle assembly contained in a battery box.
Fig. 28 is a sectional view of a major part of the vehicle body rear portion.

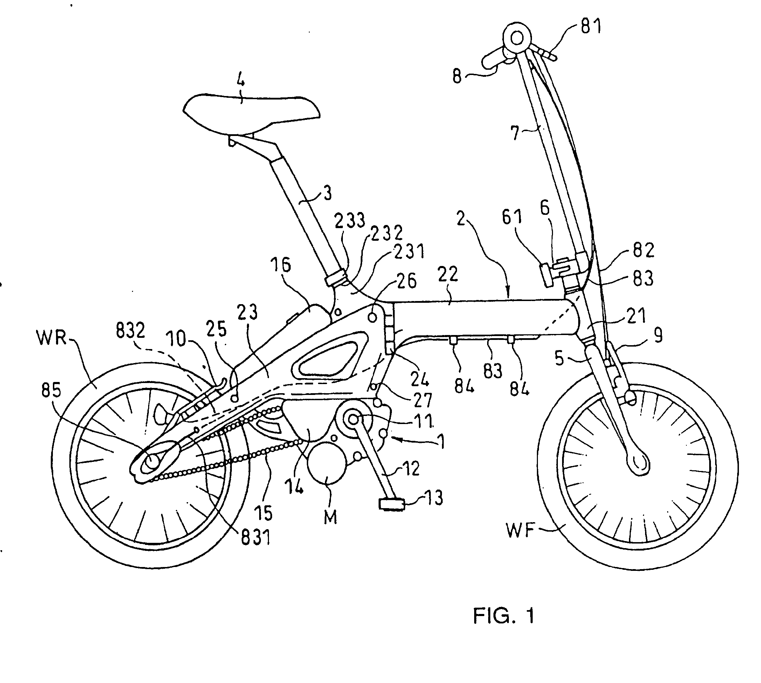

Fig. 1 is a side view of a motor-assisted bicycle comprising a handle lever according to one embodiment of the present invention. A vehicle body frame 2 of the motor-assisted bicycle comprises a head pipe 21 located at a front portion of the vehicle body, a pipe-shaped front frame 22 extended roughly horizontally rearwards from the head pipe 21, and a rear frame 23 connected to the rear end of the front frame 22. The rear frame 23 is a left-right pair of split frames die-cast from aluminum. The split frames constitutes a bifurcated structural body having a connecting portion 231 on the front side of the vehicle body, and the connecting portion 231 is provided with a boss 232 for holding a seat post 3 extended skewly upwardly rearwards therefrom. The boss 232 is provided with a fastening allowance, and the seat post 3 is securely held by the boss 232 by fastening a clamper 233. With the clamper 233 loosened, the seat post 3 can be slidden upwards and downwards relative to the boss 233, whereby the height of a seat 4 fitted to the upper end of the seat post 3 can be adjusted.

A front fork 5 is turnably supported by the head pipe 21 through a shaft portion provided at an upper portion of the front fork 5. A handle post 7 is connected to the upper end of the shaft portion through a joint 6, and a steering handle 8 is connected to the upper end of the handle post 7. The joint 6 can be loosened by an operation of a knob 61, and by this operation, the handle post 7 can be folded up with the joint 6 as a center. A front wheel WF is rotatably shaft-supported at the lower end of the front fork 5. The tip end of a wire 82 extended downwards from a brake lever 81 of the steering handle 8 is connected to a front brake 9 provided at the front wheel WF.

The rear frame 23 is connected to the front frame 22 through a hinge 24 and a lock device provided on the opposite side of the hinge 24, namely, on the left side of the vehicle body. By unlocking the lock device, the vehicle body can be folded up with the hinge 24 as a pivot; further, by releasing the connection of the hinge 24, the front frame 22 and the rear frame 23 can be separated from each other. Details of the lock device and the hinge 24 will be described later.

The appearance in side view of the rear frame 23 is that the width is larger on the front side of the vehicle body and is gradually reduced toward the rear side. A rear wheel WR as a driving wheel is shaft-supported between the rear ends of the left-right pair of the rear frames 23. Wires 83 are extended from a left handle portion of the steering handle 8 toward a rear portion of the vehicle body. The structure of the left handle portion will be described later. The wires 83 are two wires, of which one (rear brake wire) is connected to a rear brake 10 provided on the rear frame 23, while the other (speed change wire) is connected to a speed change gear 85 provided in the vicinity of a rear end portion of the rear frame 23.

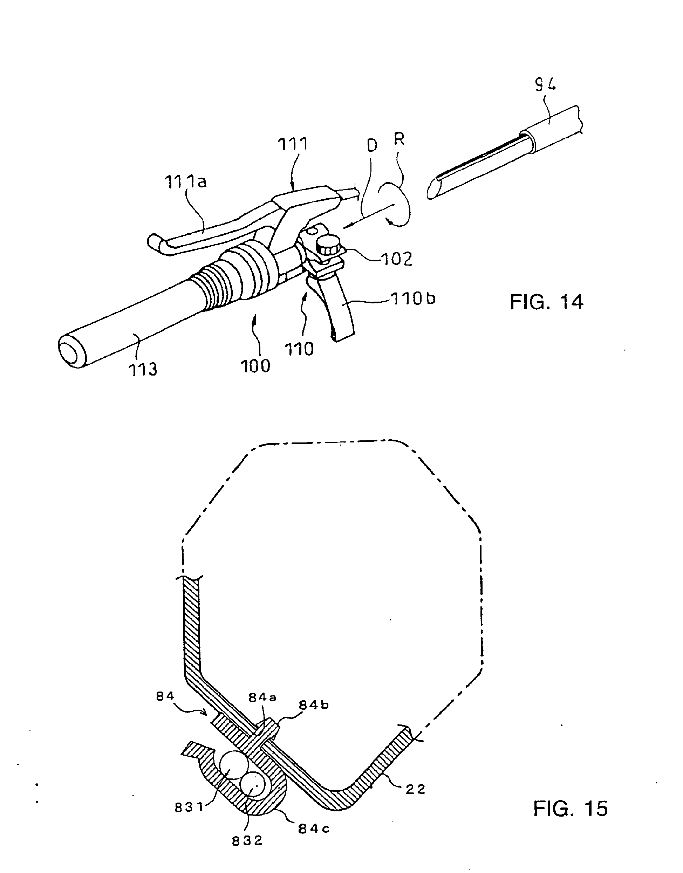

The wires 83, in the course of their rearward extension, are held tight at a lower portion of the front frame 22 by bands 84, 84. Fig. 15 is a sectional view showing the tight hold condition of the wires 83. In the figure, the band 84 can be formed of an elastic material such as a resin, and comprises a projection portion 84b fitted in a hole 84a provided in the front frame 22, and a holding portion 84c for holding by surrounding the wires 83 (speed change gear wire 831, rear brake wire 832). The holding portion 84c is U-shaped with an open portion on the upper side, and the wires 83 can be fitted into and removed from the holding portion 84c through the open portion.

Returning to Fig. 1, in the rear frame 23, the rear brake wire 832 is set on the left side of the vehicle body, while the speed change gear wire 831 is set on the right side. The rear brake wire 832 and the speed change gear wire 831 thus distributed to the left and right sides are extended rearwards in the rear frame 23. Layout of the rear brake wire 832 and the speed change gear wire 831 will be described later.

A motor assist unit 1 which does not form part of the present invention and is disposed on the rear side of an extension line of the seat post 3 is hung from a lower portion of the large width portion, namely, a front portion of the rear frame 23. The motor assist unit 1 is fixed by co-fastening at the time of mounting the rear frame 23 by a bolt 25 and a bolt 27 for fastening the left and right split portions of the rear frame 23. The motor assist unit 1 comprises an electric motor M for assisting the tread force disposed at the lowest portion thereof, and a crank shaft 11 disposed on the upper front side of the motor M. Cranks 12 are fixed to the left and right ends of the crank shaft 11, and pedals 13 are provided at the tip ends of the cranks 12. The pedals 13 are used in the condition where they are extended horizontally in the left-right direction of the vehicle body; when a hinge is adopted at the connecting portion of the pedal 13 and the crank 12, the pedals 13 can be folded up along the cranks 12 when they are not used.

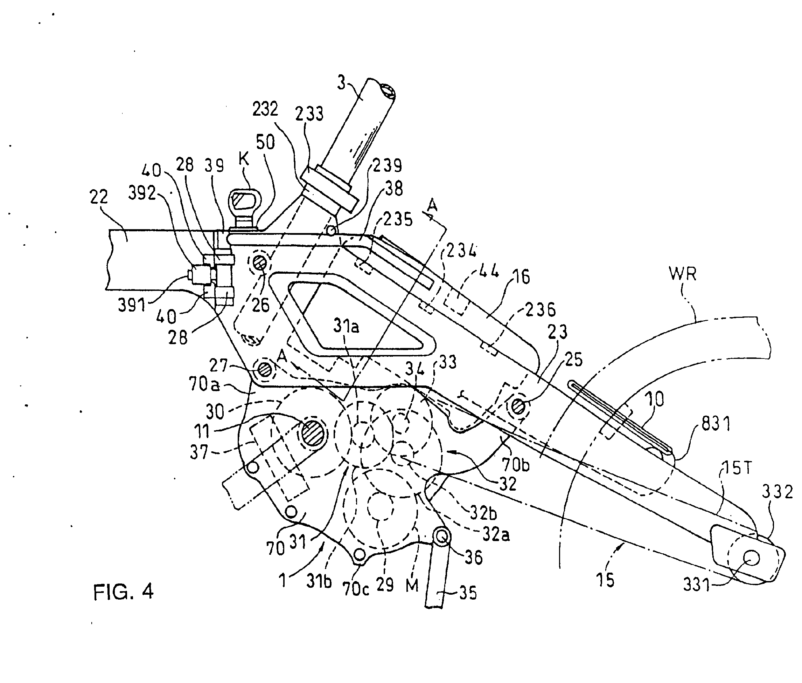

The tread force inputted from the pedals 13 and an assisting force generated by the motor M according to the tread force so as to alleviate the tread force are united through a transmission device including gears in the motor assist unit 1, and the output is taken out as rotation of a driving sprocket (denoted by symbol 33 in Fig. 4) covered by a sprocket cover 14. A chain 15 is provided for transmitting the rotation of the driving sprocket to the rear wheel WR. Incidentally, the diameters of the front wheel WF and the rear wheel WR are both 16 inches.

A battery box 16 as a battery mount portion for upper-side detachably containing a battery as a power source for the electric motor M and other electrical equipment portions is mounted in a space surrounded by the large width portion and the connecting portion 231 of the rear frame 23, and the bolt 25 (or a boss for supporting the bolt) for connecting the left-right pair of rear frames 23 at their rear portions.

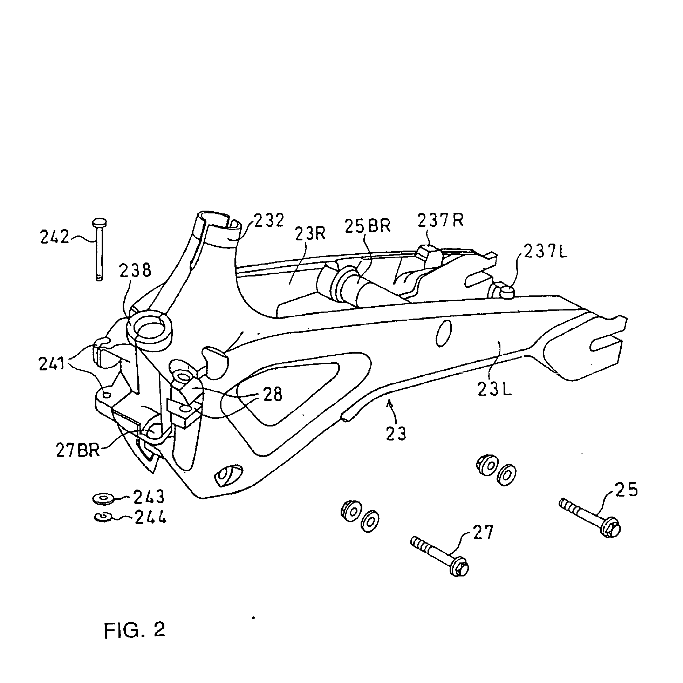

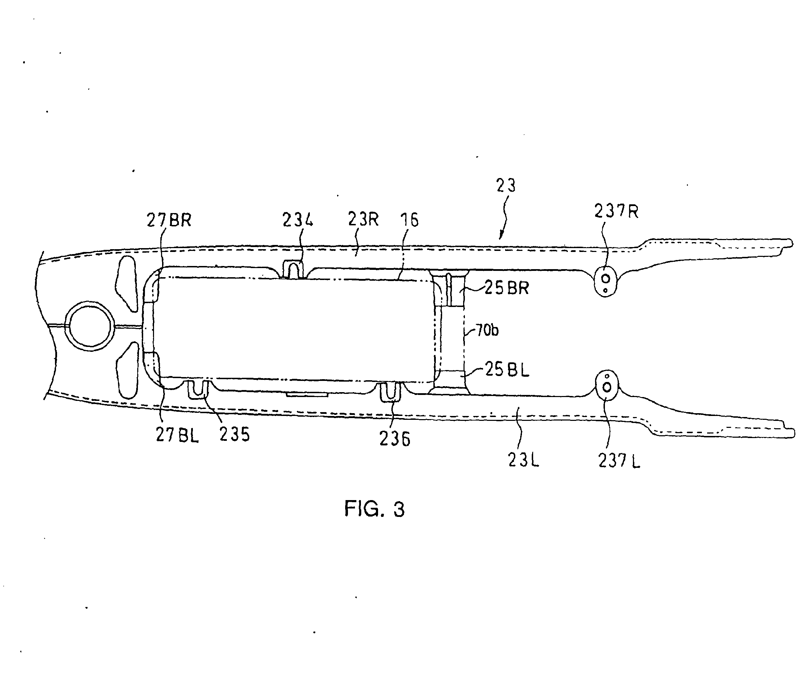

Fig. 2 is a perspective view, from the left front side of the vehicle body, of the rear frame 23 which does not from part of the present invention, and Fig. 3 is a plan view of the same. In the figures, the rear frame 23 comprises of a left portion 23L and a right portion 23R, which are provided with bosses 25BL, 25BR, 27BL, 27BR through which the bolts 25, 27 can be passed. A boss for supporting a knock pin is provided at a fastening portion 26, but is not shown in Figs. 2 and 3. A hanger portion 70b (See Fig. 4 also) provided at the upper end of the motor assist unit 1 is disposed to be clamped between the bosses 25BL, 25BR and between the bosses 27BL, 27BR, and is fitted by co-fastening with the left portion 23L and the right portion 23R.

Seats 234, 235, 236 for fitting the battery box 16 and seats 237L, 237R for fitting the rear brake 10 are provided on an upper surface of the rear frame 23. A seat 238 for fitting a power source switch for supplying an electric current from the battery to the motor assist unit 1 and the like is provided at a front portion of the boss 232 for the seat post, on the upper surface of the rear frame 23. The power source switch 50 operated by a key K is fitted to the seat 238. The battery box 16 is supported by the seats 234, 235, 236, and is contained between the left portion 23L and the right portion 23R of the rear frame 23.

Further, a boss 241 being one portion of the hinge 24 and a boss 28 turnably supporting a pin (not shown) of the lock device are provided at the front end of the rear frame 23, namely, at a mating surface with the front frame 22. A pin 242 is inserted in the boss 241, and a washer 243 and a stop ring 244 are fitted to the tip end of the pin 242. A hook (described later) on the side of the front frame 22 constituting a part of the hinge is engaged with the pin 242.

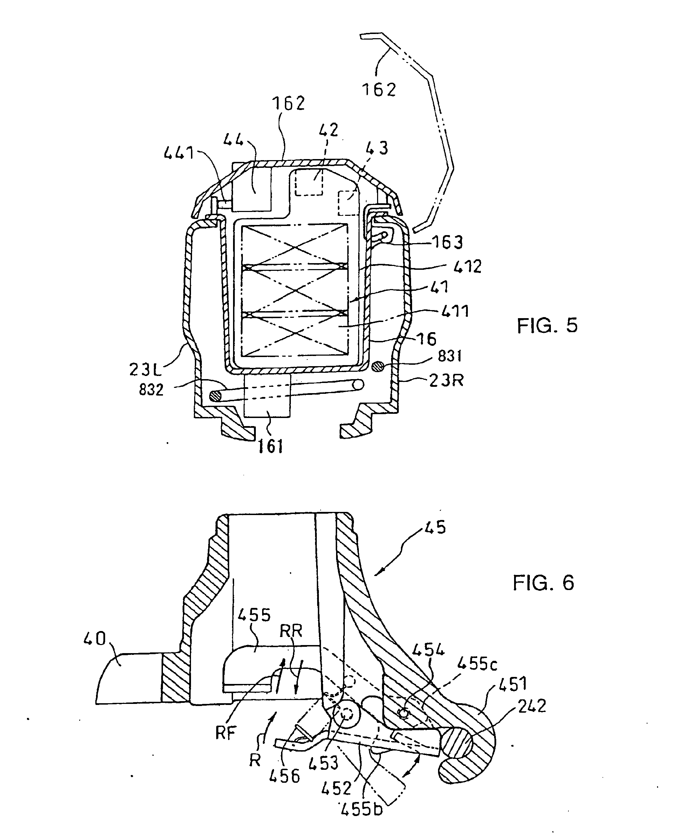

Fig. 4 is a side view of a major portion which does not form part of the present invention, showing the fitting position relationships of the rear frame 23, the battery box 16 and the motor assist unit 1, and Fig. 5 is a sectional view taken along A-A of Fig. 4. In Fig. 4, hangers 70a, 70b for connecting the motor assist unit 1 to the rear frame 23 are provided in the surrounding of a case main body 70 of the motor assist unit 1. Bosses are provided at the tip ends of the hangers 70a, 70b, and the bolts 25, 27 are passed through the bosses. The bolts 25, 27 are passed further through the boss 25BL of the rear frame 23 and the like to fasten the hangers 70a, 70b to the rear frame 23, whereby the motor assist unit 1 is hung from the rear frame 23.

Thus, a fixing portion of the motor assist unit 1 to the rear frame 23 and a fastening portion of the left and right split portions of the rear frame 23 to each other are collectively provided at one location, so that the number of component parts can be reduced, the space for providing the fixing portion and the fastening portion can be reduced, and a reduction in the size of the rear frame 23 at this portion can be contrived.

A tread force input gear 30 is connected to the crank shaft 11 through a one-way clutch not shown, and the tread force input gear 30 is meshed with a small gear 31a of a composite gear 31. On the other hand, a large gear 32a of an assist power gear (assist gear) 32 is meshed with a pinion 29 of the motor M, and a small gear 32b rotated as one body with the large gear 32a is meshed with a large gear 31b of the composite gear 31. In addition, the large gear 31b of the composite gear 31 is meshed with an output gear 34 fixed to a shaft of the driving sprocket 33. The case main body 70 of the motor assist unit 1 and the assist gear 32 are preferably constituted of molded resin articles from the view point of lightness in weight, and the assist gear 32 is preferably a helical gear from the view point of calmness or the like.

An axle 331 for supporting the rear wheel WR is provided at the rear end of the rear frame 23, and a driven sprocket 332 is connected to the axle 331 through a one-way clutch not shown. The above-mentioned chain 15 is set between the driving sprocket 33 and the driven sprocket 332.

Thus, the rotation of the motor M is transmitted to the composite gear 31 through the pinion 29 and the assist gear 32, and the tread force inputted from the crank shaft 11 is transmitted to the composite gear 31 through the tread force input gear. The tread force and the assist power are united by the composite gear 31, and the resultant power is transmitted to the driving sprocket 33 and then transmitted to the rear wheel WR through the driven sprocket 332. A controller 37 disposed at a front portion in the inside of the case 70 controls the rotation of the motor M, based on a tread force value inputted from a tread force detection means not shown.

A pivot 36 for turnably supporting a main stand 35 constituted of a cast aluminum article is fitted to a lower portion on the rear side of the main body case 70. A projection 70c provided at the lower end of the main body case 70 is a leg portion for self-standing of a rear portion of the bicycle inclusive of the rear frame 23 when the front frame 22 and the rear frame 23 are separated from each other; when the rear portion of the bicycle is placed on the ground, the rear portion can self-stand on the ground with the projection 70c and the rear wheel WR.

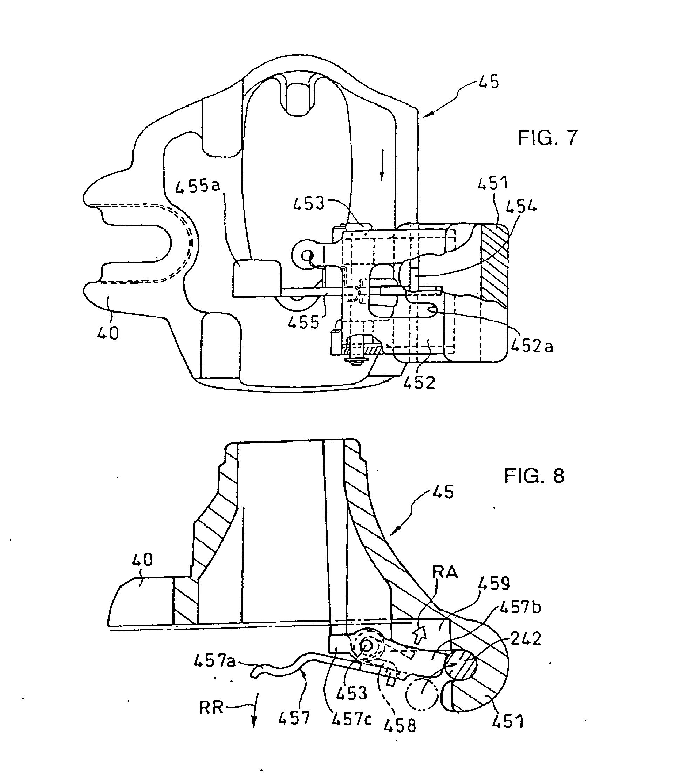

A lock pin 39 having a lock lever 38 is passed through bosses 28, 28 provided at the front end of the rear frame 23. A bolt 391 is provided to be turnable with the lock pin 39 as a center, and a nut 392 is mated with the bolt 391. The bolt 391 is passed through a groove (for detailed shape, see Figs. 6 and 7) of an engaging portion 40 formed so as to project from the front frame 22, and one surface of the nut 392 abuts against the engaging portion 40 to form a fastening surface. A central portion of the lock pin 39 to which the bolt 391 is fitted is eccentric with respect to the hole of the boss 28, and the abutment strength of the nut 392 and the engaging portion 40 is adjusted by turning the lock lever 38. In the condition where the lock lever 38 is turned to the position along the rear frame 23 as shown in the figure, the nut 392 and the engaging portion 40 abut against each other strongly, and the front frame 22 and the rear frame 23 are strongly connected to each other.

On the other hand, with the lock lever 38 turned to the direction away from the rear frame 23, namely, turned toward the direction orthogonal to the vehicle body, the nut 392 is deviated in the direction away from the engaging portion 40 (to the front side of the vehicle body) according to the amount of eccentricity of the lock pin 39, whereby the fastening by the nut 392 is weakened. As a result, the engagement between the nut 392 and the engaging portion 40 can be released by turning the bolt 391 relative to the lock pin 39, and the front frame 22 and the rear frame 23 can be folded up with the hinge 24 as a center.

The bolts 25, 27 are provided in order to connect the left and right split rear frames 23 to each other, and fastening portions 26, 239 with knock pins intermediately provided are provided in the vicinity of connecting portions to the front frame 22 in order to enhance accuracy of fastening.

The seat post 3 is supported by the boss 232 provided at an upper portion of the rear frame 23, and an extension portion projected downwards from the supported portion is passed between the fastening portions 26 and 239. The seat post 3 is supported by the boss 232 fastened by the clamper 233, and is positioned by the fastening portions 26, 239, whereby it is supported with good accuracy. Particularly, the load of the rider exerted on the seat post 3 would act so as to turn the seat post 3 clockwise in Fig. 4, with the boss 232 as a center. At this time, the turning of the seat post 3 is restrained by a boss provided at the fastening portion 26, and the load is received by a side surface of the boss at the fastening portion 26. Thus, the load on the seat post 3 is dispersed to a plurality of portions, so that the strength of the rear frame 23 itself need not be increased excessively.

In Fig. 5 which shows a portion that does not form part of the present invention, the battery 41 contained in the battery box 16 is, for example, formed in a pack structure in which a plurality of cells 411 consisting of nickel-hydrogen cells contained in a case 412. An indicator 42 indicating the residual electric power by LED display is provided at an upper portion of the case 412. A charging connector 43 used at the time of charging the battery 41 by removing the battery 41 from the battery box 16 and a fuse (not shown) are also provided in the case 412. A terminal (not shown) for connecting the battery 41 and the controller 37 to each other is contained in a projected portion 161 at a bottom portion of the battery box 16.

The battery box 16 is provided with a lid 162, which is fitted to the battery box 16 by a hinge 163. The two dotted chain line in the figure shows the condition where the lid 162 is opened. The lid 162 is provided with a window (not shown) so that the indicator 42 can be looked through, and is provided with a key device 44. The key device 44 comprises a claw 441 which can be drawn in and out by rotating a key (preferably in common with the key for operating the power source switch), and the claw 441 is engaged with the battery box 16, whereby the lid 162 is locked.

Of the wires 83, the speed change gear wire 831 is extended rearwards along the right portion 23R of the rear frame 23 in a space surrounded by the rear frame 23, and the rear brake wire 832 is deviated toward the left portion 23L of the rear frame 23 at its intermediate portion and extended rearwards along the left portion 23L.

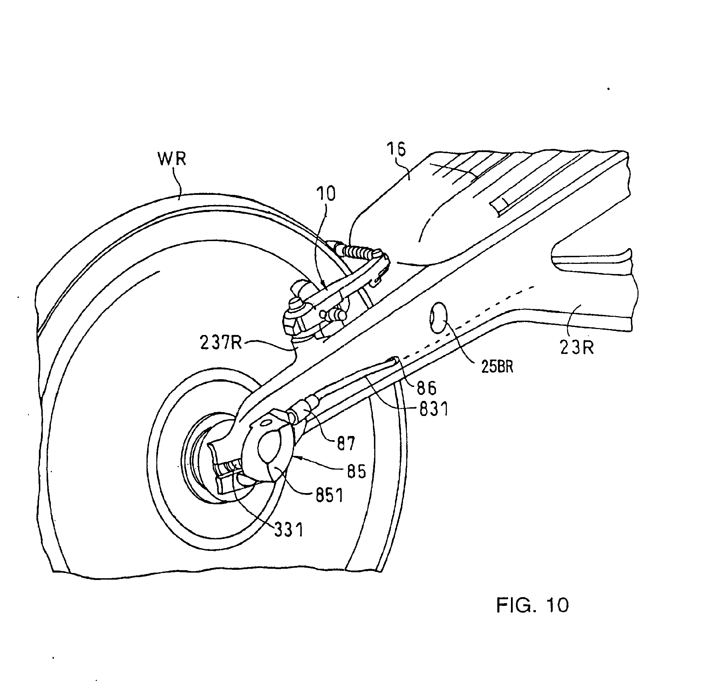

Next, a connecting portion between the speed change gear wire 831 and the speed change gear 85 and a connecting portion between the rear brake wire 832 and the rear brake 10 will be described in detail which do not form part of the present invention. Fig. 10 is a perspective view from the right rear side of the motor-assisted bicycle. In the figure, the right portion 23R of the rear frame 23 is provided with a through-hole 86, through which the speed change gear wire 831 is led out to the exterior. The speed change gear 85 is provided on the axle 331 of the rear wheel WR, and a connector 87 fitted to an end portion of the speed change gear wire 831 is attached to a housing 851 for the speed change gear 85. More in detail, the speed change gear 831 is covered by a covering tube, and the connector 87 is connected to the covering tube. The speed change gear wire 831 passed through the connector 87 to reach to the housing 851, and is connected to a mechanism portion (not shown) of the speed change gear 85. The rear brake 10 is pivotally supported on seats 237L, 237R (only the seat 237R is shown in Fig. 10) provided on an upper surface of the rear frame 23.

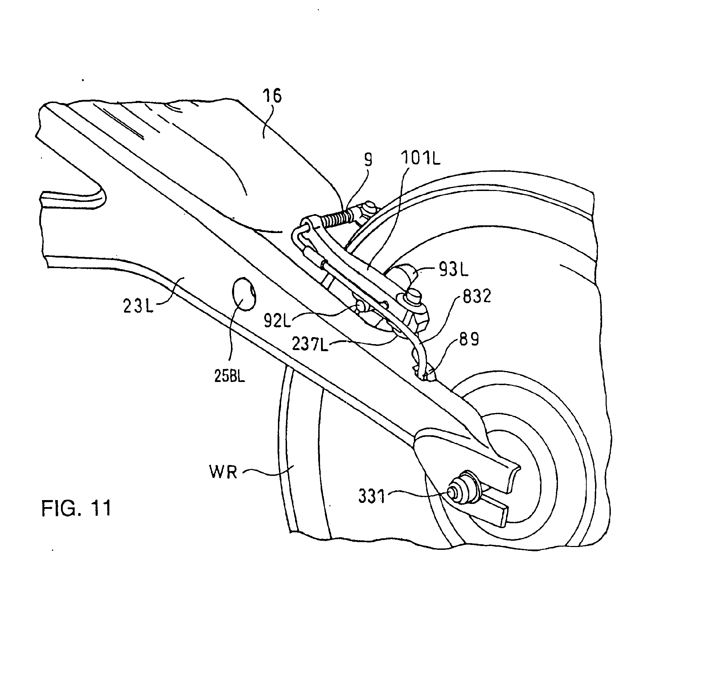

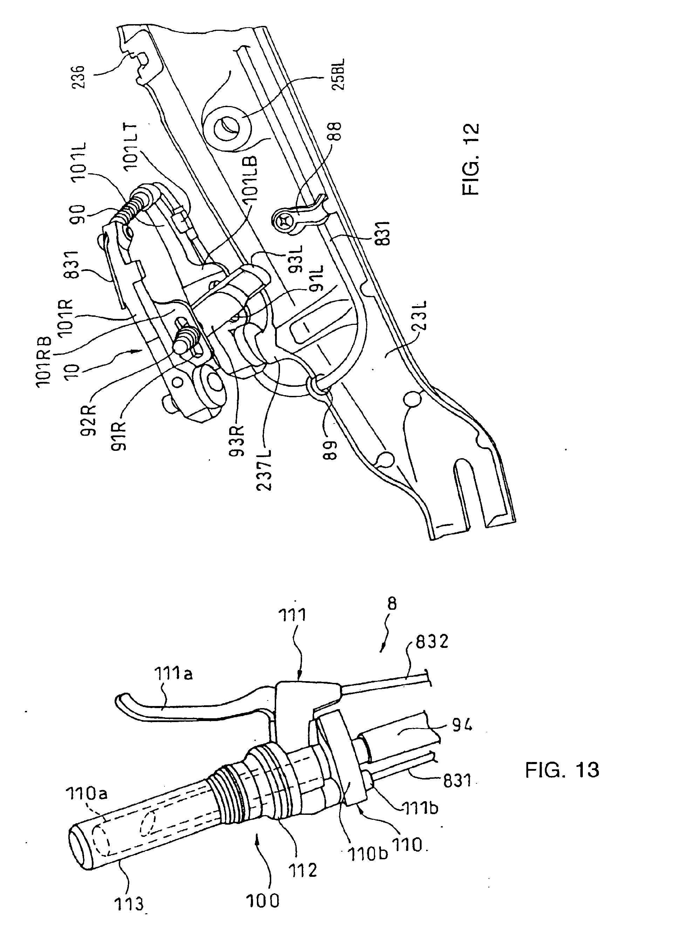

Fig. 11 is a perspective view from the left rear side of the motor-assisted bicycle, and Fig. 12 is a perspective view from the lower side of the same. The portions shown in Fig. 11 and Fig. 12 do not form part of the present invention. In the figures, the rear brake wire 832 is extended rearwards along the back side of the left portion 23L of the rear frame 23. In its course, the rear brake wire 832 is held by a metallic stopper 88 screwed to the rear frame 23. An upper surface of the left portion 23L of the rear frame 23 is provided with a through-hole 89, through which the rear brake wire 832 is led out to the upper side.

The rear brake 10 comprises levers 101L, 101R pivotally supported respectively by the seats 237L, 237R (only the seat 237L is shown in Figs. 11 and 12) provided at the upper surface of the rear frame 23. The rear brake wire 832 passes through a horizontal hole provided in a tip end (an end portion on the opposite side of a pivot portion) of the left-side lever 101L, and, further, passes through a tip end of the right-side lever 101R to be led out to the right outer side of the vehicle body. The rear brake wire 832 is fixed to the right-side lever 101R, and is slidable relative to the left-side lever 101L. More in detail, the rear brake wire 832 is covered by a covering tube, in the same manner as the speed change gear wire 831, and is attached to a lower projected portion 101LT of the left-side lever 101L. At the portion between the tip ends of the levers 101L, 101R, the rear brake wire 832 is covered by a flexible cover 90, which includes a spring member acting in the direction for expanding the distance between the tip ends of the levers 101L, 101R. The levers 101L, 101R are provided with lower flange portions 101LB, 101RB, and bolts 92R, 92L are passed through slots 91L, 91R formed in the lower flange portions 101LB, 101RB. Brake shoes 93L, 93R are fitted respectively to end portions of the bolts 92R, 92L. The positions of the bolts 92L, 92R can be adjusted in the slots 91L, 91R so that the brake shoes 93L, 93R conform to a rim of the rear wheel WR.

With this constitution of the rear brake 10, an operation of the rear brake wire 832 from the side of the handle 8 reduces the distance between the tip ends of the levers 101L, 101R. As a result, the brake shoes 93L, 93R are drawn to the side of the rim of the rear wheel WR, whereby brake is applied.

Fig. 13 is a perspective view of a left handle portion of the handle 8. In the figure, a handle assembly 100 is fitted to a bar portion 94 of the handle 8. The handle assembly 100 comprises a fastening member 110 for detachably connecting the handle assembly 100 to the bar portion 94, a brake handle member 111 for operating the rear brake 10, a shift operating member 112 for operating the speed change gear 85, and a grip 113.

The fastening member 110 comprises a sleeve 110a fitted over the bar portion 94, and an operating lever 110b for a cam mechanism portion for fastening and fixing the sleeve 110a to the bar portion 94 by a rotational cam. The brake handle member 111, the shift operating member 112, and the grip 113 are fitted on the sleeve 110a. The rear brake wire 832 is connected to a lever 111a of the brake handle member 111.

On the other hand, the speed change gear wire 831 introduced by passing through a guide 111b provided in the brake handle member 111 is connected to the shift operating member 112. The handle assembly 100 with the above constitution can be fastened to and released from the bar portion 94 in a stroke, by operating the lever 110b of the fastening member 110.

Fig. 14 is a perspective view showing the condition where the handle assembly 100 is detached from the bar portion 94. In detaching the handle assembly 100 from the bar portion 94, the lever 110b is raised, the clamp 102 being a fastening member is loosened, and the handle assembly 100 is turned by a predetermined amount in the direction of arrow R. By this, the engagement between the sleeve 110a and the bar portion 94 is released, and movement in the direction of arrow D is enabled. Therefore, from this condition, the handle assembly 100 can be detached from the bar portion 94 by pulling out in the direction of arrow D.

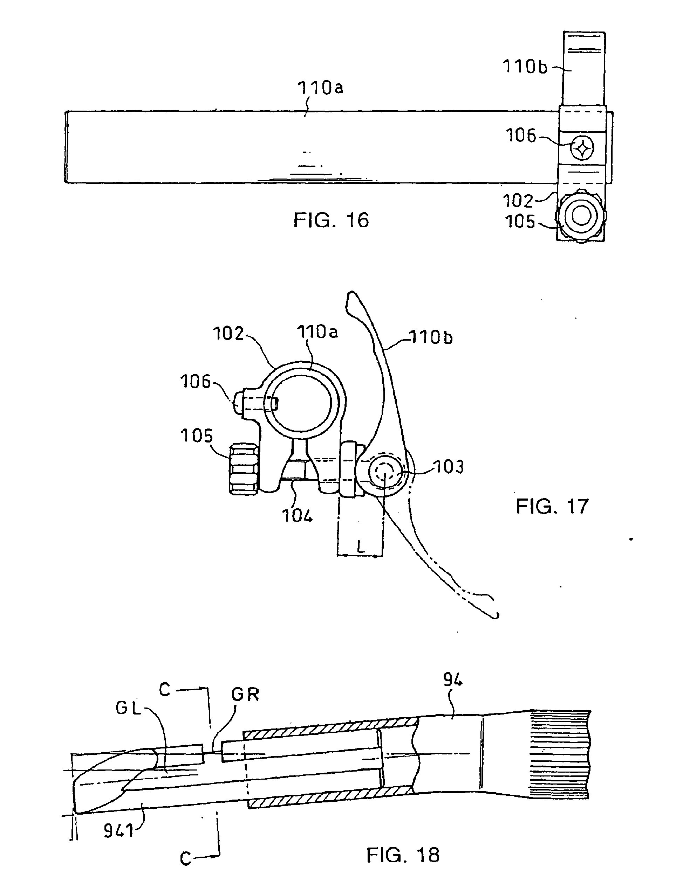

The structure of fastening the sleeve 110a by the lever 110b will be described. Fig. 16 is a front view of a fastening member 110 as a clamp means, and Fig. 17 is a side view of the same. In the figures, the clamp 102 is fitted over the outer periphery of the sleeve 110a formed of a compressible resin, and the clamp 102 is pressed against the outer periphery of the sleeve 110a by turning the lever 110b, thereby compressing the sleeve 110a. A pivot 103 supporting the lever 110b is an eccentric shaft, and a bolt 104 fitted to the clamp 102 is turnably supported on the eccentric shaft 103. A nut 105 is mated to the tip end of the bolt 104.

In the condition where the lever 110b is kicked up to the upper side in Fig. 17, the distance L from the eccentric shaft 103 to an end portion of the clamp 102 is maximum, and the sleeve 110a is strongly fastened by the clamp 102. On the other hand, when the lever 110b is lowered to the position indicated by two dot chain line in the figure, the distance L is shortened, and the fastening of the sleeve 110a is weakened. Namely, the outer peripheral surface of the lever 110b supported by the eccentric shaft 103 constitutes an eccentric cam surface such that the radius is varied according to the rotational angle. The fastening force by turning of the lever 110b can be preliminarily set by rotating the nut 105 to vary the advance or retraction amount relative to the bolt 104.

Further, a stop screw 106 for preventing escape is provided penetrating through the clamp 102 and the sleeve 110a. Of the stop screw 106, the tip end projected to the inside of the sleeve 110a is engaged with a groove (described later) provided in the bar portion 94, and so acts as to prevent the fastening member 110 from easily slipping off from the bar portion 94.

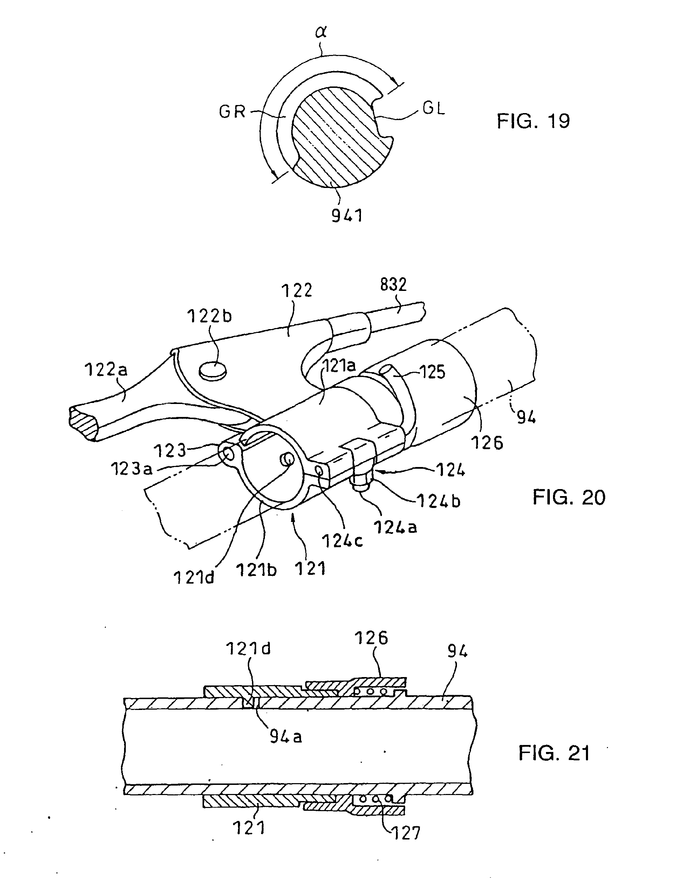

Fig. 18 shows a tip end portion of the bar portion 94, and Fig. 19 is a sectional view taken along C-C of Fig. 18. In the figures, an extension chip 941 is inserted in the tip end of the pipe-shaped bar portion 94. The extension chip 941 is provided with a longitudinal groove GL, and is provided in the circumferential direction with a groove GR connected to the groove GL. The stop screw 106 is engaged with the groove GL and the groove GR. The groove GR is not provided along the entire circumference of the chip 941 but provided for a predetermined length (namely, by an angle α: about 180°).

In inserting the sleeve 110a into the extension chip 941, the stop screw 106 is engaged with the groove GL. Then, when the sleeve 110a is inserted until the stop screw 106 reaches to the circumferential groove GR, the sleeve 110a is turned in the direction opposite to the direction R (See Fig. 14). By this, the tip end of the stop screw 106 is guided by the groove GR, and comes into contact with an end portion of the groove GR when the sleeve 110a is turned by the angle α. At this position, namely, the normal-use position of a rear brake handle member 111, the lever 110b of the fastening member 110 is turned upwards in Fig. 17, whereby the sleeve 110a is compressed, and the handle assembly 100 is fixed to the extension chip 941. The operation for detaching the handle assembly 100 from the bar portion 94 is the same as has been described referring to Fig. 14.

It is set that, in the condition where the stop screw 106 conforms to the groove GL and the handle assembly 100 can be detached from the bar portion 94, the handle assembly 100 is located at the position of Fig. 14, namely, at such a position that the lever 111a of the brake handle member 111 is directed to the rider's side. By this, where the handle assembly 100 is incompletely fitted to the bar portion 94, the rider notices the abnormal condition, so that riding under an incomplete fitted condition can be prevented from occurring. Therefore, the riding is enabled by such mounting that the stop screw 106 securely reaches to the terminal end of the groove GR, so that assuredness of operation of re-assembling after detaching is enhanced.

Thus, the handle assembly 100 can be easily fitted to and detached from the handle 8 by only the operations of the lever 110b. Therefore, when the vehicle body frame is separated into front and rear portions, the handle assembly 100 can be detached from the handle 8, and the portions inclusive of the separated rear frame 23 can be gathered as one body.

The rotating direction of the brake handle member 111 in the case of detaching the handle assembly 100 from the handle is not limited to the direction of symbol R, and may be the opposite direction. Where such a detaching direction is set, the groove GR formed in the chip 941 is in the direction opposite to the direction shown in Figs. 18 and 19.

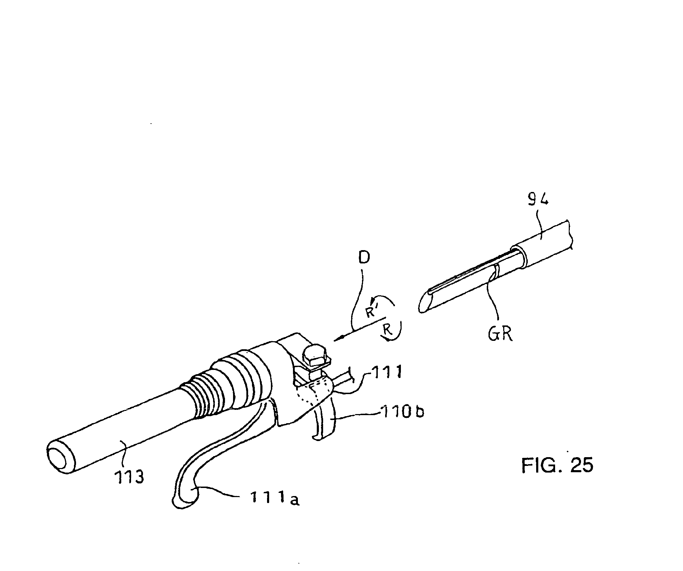

Fig. 25 is a perspective view of a handle end portion in the case where the position of forming the groove GR with respect to the groove GL is opposite to the example shown in Figs. 18 and 19. As shown in the figure, in the case of the constitution such that the handle assembly 100 is fitted to the bar portion 94 of the handle 8 by turning the brake handle member 111 in the direction R and is detached by turning the brake handle member 111 in the direction R', the fitting and detaching directions R, R' of the brake handle member 111 are the same as the fastening direction Y and the loosening direction Y' of the lever 110b of the fastening member 110 (R = Y, R' = Y'), so that a consistency can be contrived as to the fitting and detaching operations for the handle assembly 100, which is convenient.

Particularly, in the case where the brake handle member 111 is turned in the direction R to be located at the normal-use position and then the lever 110b is turned in the direction Y to achieve fastening, the brake handle member 111 would not be turned by the operation of fastening the lever 110b. Therefore, the fastening and fixing of the handle assembly 100 can be conducted at an assured position.

Next, a modified embodiment of an assembly in which a brake handle member can be easily fitted to and detached from a handle will be described. Fig. 20 is a perspective view of a handle assembly according to a first modified embodiment, and Fig. 21 is a sectional view of the same. In the figures, a clamp 121 is fittably and detachably provided at the bar portion 94 of the handle 8. A brake handle member 122 is connected to the clamp 121. The brake handle member 122 is provided with a lever 122a turnably supported by a pin 122b, and a rear brake wire 382 is connected to the lever 122a. The clamp 121 comprises of two split members 121a, 121b, which are connected by a hinge 123 and a stopper 124. The stopper 124 comprises a bolt 124a, a nut 124b (double nut), and an eccentric shaft 124c turnably supporting the bolt 124a. The eccentric shaft 124c has a central portion eccentric relative to both end portions supported by the member 121b, and the bolt 124a is supported by the central portion. A lever 125 is connected to an end portion of the eccentric shaft 124c, and the force of connection between the members 121a, 121b by the bolt 124a and the nut 124b is varied by turning the lever 125.

The lever 125 is turned to loosen the fastening force by the bolt 124a and the nut 124b, and the bolt 124a is turned with the eccentric shaft 124c as a center, whereby the engagement of the nut 124b and the member 121b is released. Then, the clamp 121 is opened with a shaft 123a of the hinge 123 as a center, and the brake handle member 122 and the clamp 121 are detached from the bar portion 94.

A projection 121d is provided on an inner peripheral surface of the member 121b of the clamp 121, and the projection 121d is fitted in an engaging hole 94a provided in the bar portion 94, to position the brake handle member 122 relative to the bar portion 94.

In order to make more assured the condition where the clamp 121 holds the bar portion 94, a ring 126 and a spring 127 can be provided as a lock means. The ring 126 is disposed slidably on the outer periphery of the bar portion 94, is urged toward the clamp 121 by the spring 127, and covers the outer periphery of an end portion of the clamp 121. By this constitution, the clamp 121 can be opened by not only releasing the fastening by the bolt 123a and the nut 124b but also releasing the engagement between the ring 126 and the clamp 121 through retracting the ring 126.

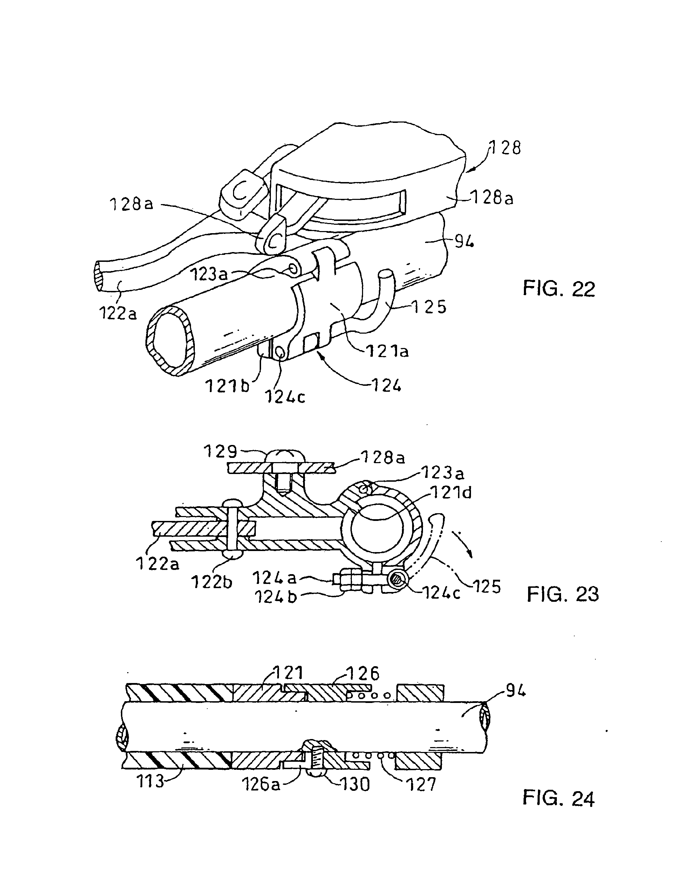

Fig. 22 is a perspective view of a handle assembly according to a second embodiment, and Fig. 23 is a sectional view of the same. In the figures, the same symbols as those in Figs. 20 and 21 denote the same or equivalent portions. In the second embodiment, a shift lever type speed change gear operating portion 128 is provided on a brake handle member 122. A housing 128a of the speed change gear operating portion 128 is fixed to the brake handle member 122 by a screw 129. An eccentric shaft 124c is disposed on the lower side, in order to prevent interference between a shift lever 128b of the speed change gear operating portion 128 and the fastening portion of the clamp 121, namely, the bolt-nut and a lever 125, and to maintain favorable operability of the lever 125 and the shift lever 128.

Fig. 24 shows a lock means for securing the fixation of the clamp 121, in which the same symbols as those in Fig. 21 denote the same or equivalent portions. In this example, the amount of deviation of the ring 126 toward the clamp 121 is restricted by a stop spring 130. Namely, the stop screw 130 is engaged with a cutout 126a provided at an end portion of the ring 126, namely, on the side of the clamp 121, thereby restricting the movement of the ring. A grip 113 is fitted over the bar portion 94, and a stopper 131 of the spring 127 is attached to the bar portion 94 by welding or the like.

Next, the hinge 24 for connecting the front frame 22 and the rear frame 23 will be described in detail. The hinge 24 does not form part of the present invention. Fig. 6 is a sectional plan view of a rear end portion of the front frame 22 including the hinge 24, and Fig. 7 is a front view (view from the rear side of the vehicle body) of the same. The rear end portion is constituted of a rear end component (hereinafter referred to as "end block") integrated by welding to a pipe-shaped component constituting the front frame 22. In the figures, the end block 45 is provided with a hook 451, which is sized and positioned so as to be capable of engaging with the pin 242 through being clamped between the bosses 241, 241 provided on the rear frame 23.

A lock plate 452 is so provided as to shut off an opening portion of the hook 451 which is U-shaped. The lock plate 452 is pivotally supported relative to the end block 45. Further, the end block 45 is provided with an operating lever 455 pivotally supported by a spring pin 454. The operating lever 455 comprises an operating portion 455a to which a finger is to be pressed, and a hook 455b. The operating lever 455 is connected to the lock plate 452 by a tension spring 456, the hook 455b fronts on the face side of the lock plate 452, namely, the side of the rear frame 23 through a cutout window 452a formed in the lock plate 452, and is engaged with a frame of the cutout window 452a. With the hook 455b engaged with the lock plate 452, turning in the direction of arrow R of the lock plate 452 is restrained although the tension spring 456 is acting. The operating lever 455 has a contact portion 455c for contact with the end block 45 in the vicinity of the pivotal support portion, and the operating lever 455 is inhibited from turning in the direction of arrow RR from the position shown in the figure.

With this constitution, the opening portion of the hook 451 is shut off by a tip end portion of the lock plate 452, so that the pin 242 engaged with the hook 451 cannot escape from the hook 451. Therefore, even when the lock device operated by the lock lever 38 is released, the vehicle body frame (consisting of the front frame and the rear frame) can only be folded up with the pin 242 as a center.

To further separate the vehicle body frame into the front frame 22 and the rear frame 23, the operating portion 455a of the operating lever 455 is pushed into the depth (direction of arrow RF) of the end block 45. Then, the operating lever 455 is turned with the pin 454 as a center, and the lock plate 452 is turned with the pin 453 as a center, whereby the opening portion of the hook 451 is opened. Therefore, the pin 242 can escape from the hook 451, and the vehicle body frame can be completely separated at the connection portion of the front frame 22 and the rear frame 23.

As a result of the turning of the operating lever 455 and the lock plate 452, the engagement between the hook 455b of the operating lever 455 and the lock plate 452 is released, and the opened condition of the opening portion is maintained after the pressing on the operating lever 455 is stopped. Therefore, the operation of pressing the operating lever 455 and the work of separating the vehicle body frame can be easily performed stepwise by using both hands.

In the case of re-assembling the separated vehicle body frame, the pin 242 is hooked on the hook 451, and then the lock plate 452 is pushed to the side of the hook 451 to engage the hook 456b of the operating lever 455 with the lock plate 452. By this operation, the opening portion of the hook 451 is shut off. Subsequently, the mating surfaces of the front frame 22 and the rear frame 23 are opposed to each other, the nut 392 of the lock device shown in Fig. 4 is hooked on the engaging portion 40, and the lock lever 38 is turned to the direction along the rear frame 23, thereby locking. The degree of tightness of the nut 392 and the engaging portion 40 when the lock lever 38 is positioned to be along the rear frame 23 can be adjusted by the position of the nut 392 relative to the bolt 391.

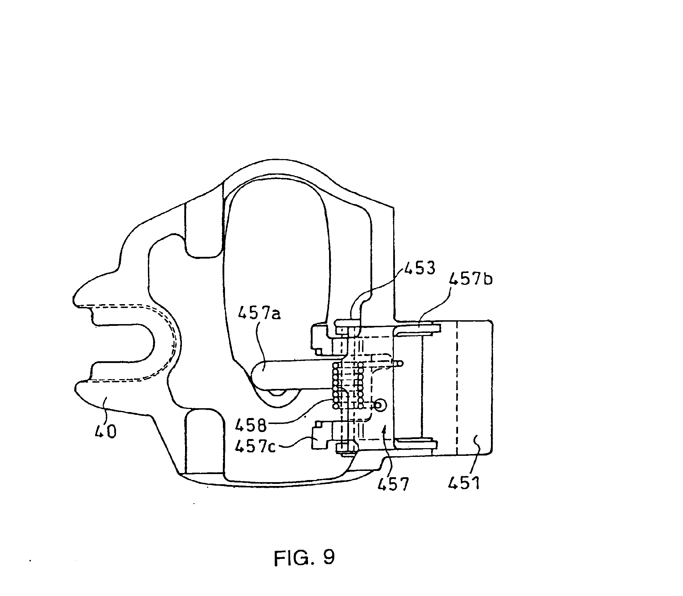

Next, a modified embodiment of the hinge 24 which does not form part of the present invention will be described. Fig. 8 is a sectional plan view of a rear end portion of the front frame 22 according to the modified embodiment of the hinge 24, Fig. 9 is a front view of the same, and the same symbols as those in Figs. 6 and 7 denote the same or equivalent portions. In the figures, the pivot pin 242 fixed to the side of the rear frame 23 is engaged with the hook 451, and a lock plate 457 is provided at a position for shutting off the opening portion (cutout portion) of the hook 451 so that the pivot pin 242 cannot escape. The lock plate 457 comprises an operating portion 457a so formed that a finger can be hooked thereon, and a lock portion 457b for shutting off the cutout portion, and is pivotally supported by the end block 45 using a pin 453. A spring (torsion coil spring) 458 is engaged with the lock plate 457 so as to exert a force in the direction for bringing the operating portion 457a toward the end block 45, in other words, in the direction for spacing the lock portion 457b away from the end block 45. Since the rear end of the lock portion 457b, namely, an end portion 452c on the side of the operating portion 457a makes contact with an end face of the end block 45, the lock plate 457 is not turned in the direction away from the end block 45 beyond the position where the lock portion 457b is opposed to the cutout portion.

On the other hand, the end block 45 is provided with an escape portion (recessed portion) 459 so that the lock portion 457b can be turned in the direction (arrow RA) toward the end block 45. The depth of the escape portion 459 is so set that the lock portion 457b escapes to the side of the end block 45 to open the cutout portion of the hook 451.

With this constitution, the lock plate 457 is urged by the spring 458 and the opening portion of the hook 451 is shut off by the lock portion 457b, so that the pivot pin 242 cannot escape from the hook 451. Therefore, when only the lock device operated by the lock lever 38 is released, the vehicle body frame can only be folded up with the pivot pin 242 as a center.

In order to separate the vehicle body frame into the front frame 22 and the rear frame 23 after folding up the vehicle body frame, a finger is hooked on the operating portion 457a of the lock plate 457 and the operating portion 457a is pulled in the direction away from the end block 45 (the direction of arrow RR). Then, the lock portion 457b is retracted into the escape portion 459, and the opening portion of the hook 451 is opened. Therefore, the pivot pin 242 can escape from the hook 451, and the vehicle body frame can be completely separated at the connecting portion between the front frame 22 and the rear frame 23.

In the case of re-assembling the separated vehicle body frame into a unity, the pivot pin 242 is pressed against the lock portion 457b to retract the lock portion 457b into the escape portion 459. When the pivot pin 242 is contained in the hook 451, the pressing force on the pivot pin 242 against the lock portion 457b is released. As a result, the lock portion 457b is turned to the side opposite to the arrow RA by the urging force of the spring 453, whereby the opening portion of the hook 451 is shut off.

In the above embodiment of the hinge 24, the pivot pin 242 is provided on the side of the rear frame 23, whereas the hook 451 with which the pivot pin 242 is engaged and the lock device comprising the lock plates 452, 457, the operating lever 455 and the like are provided on the side of the front frame 22. However, this may be reversed; namely, the pivot pin 242 may be provided on the side of the front frame 22, and the lock plate 452 and the like may be provided on the side of the rear frame 23.

In the case of transporting the component units individually after the bicycle is separated into the front frame 22 side and the rear frame 23 side, as has been described above, it is preferable to gather the handle assembly 100 detached from the handle 8 to the rear frame 23 side, for easy transportation.

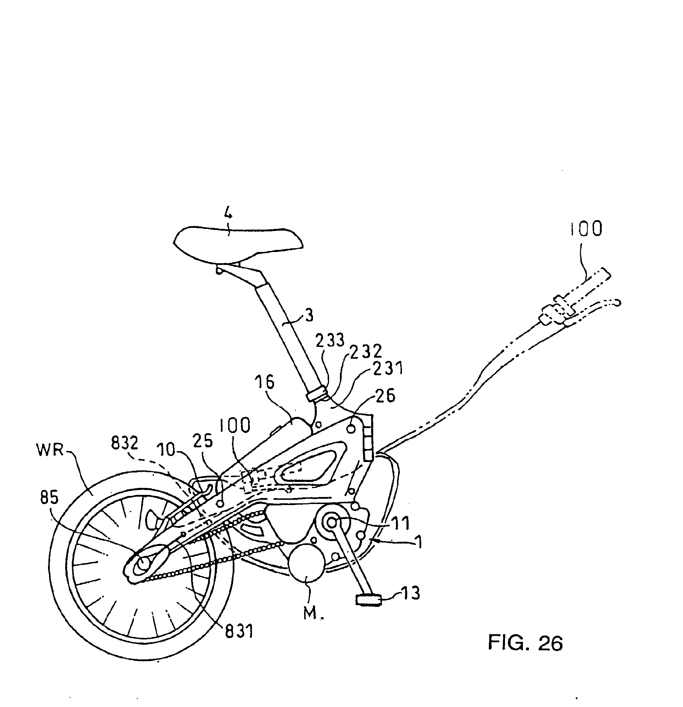

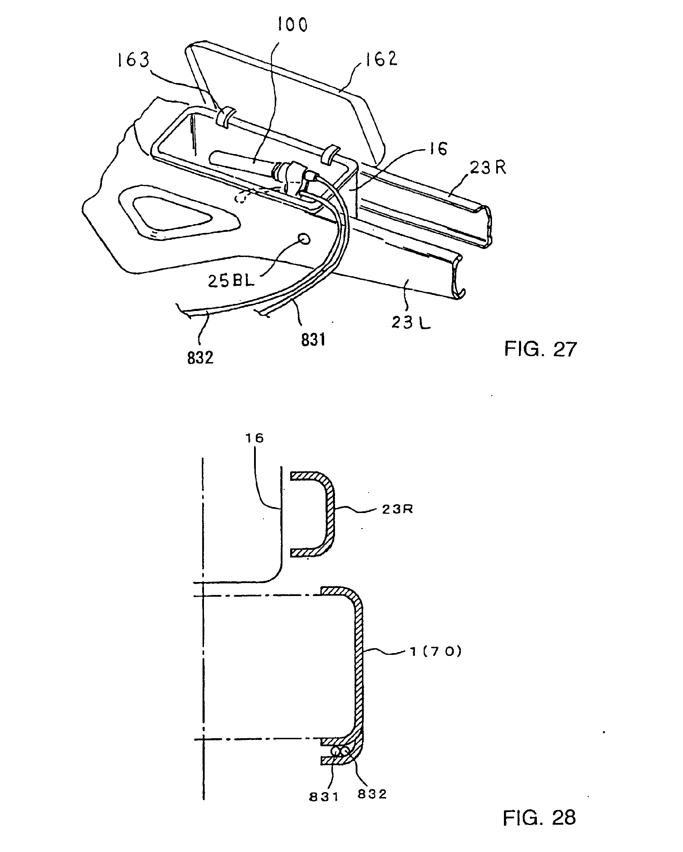

Fig. 26 is a side view of a motor-assisted bicycle showing the mode of gathering the separated rear frame side and the handle assembly 100, Fig. 27 is a perspective view of a major part of the motor-assisted bicycle including the handle assembly 100 contained in the battery box 16, and Fig. 28 is a sectional view of the vehicle body frame showing the mode of holding the wires to the assist unit 1 which mode does not form part of the present invention. As shown in these figures, the handle assembly 100 detached from the handle 8 is connected to the rear frame 23 side by the wires 831, 832. Since the battery 41 can be easily detached from the battery box 16 and carried, the battery box 16 can be made empty at the time of transportation. Therefore, the handle assembly 100 is moved to the rear side of the vehicle body together with the wires 831, 832, and the handle assembly 100 can be contained in the battery box 16. As shown in Fig. 28, where the wires 831, 832 are rolled in a lower portion of the assist unit 1, a wire holding portion or guide is provided as one body with or separately from the casing main body 70, whereby the wires 831, 832 can be easily handled.

In the above embodiments, the present invention has been described referring to the handle lever of a motor-assisted bicycle. However, the present invention is not limited to this, and can be applied generally to bicycles whose vehicle body frame can be separated into front and rear units, whereby the following effects can be displayed.

The invention enables a rear brake wire and a speed change gear wire to be separated from a front frame together with a rear frame in the case of separating a vehicle body frame into a front portion and a rear portion. To achieve this, a rear brake wire 832 and a speed change gear wire 831 comprise a handle assembly 100 constituted integrally so that a rear brake operation and a speed change operation can both be performed on the left handle side. The handle assembly 100 comprises a fastening member 110 having a sleeve 110a fitted onto a bar portion 94 of a handle. The fastening member 110 comprises a cam mechanism operated by a lever 110b, and, by the lever operations, the sleeve 110a is fastened and released, whereby the handle assembly 100 can be easily fitted to and detached from the handle.

## Claims

1. A bicycle comprising:
a handle (8, 94);
an operating body comprising an operating lever (111a) detachably fitted to the handle (8, 94) and a wire (832) operated by said operating lever (111a);
clamp means (102) fastening and fixing said operating body to said handle (8, 94);
a cam mechanism portion (110b, 103, 104, 105) for opening and closing said clamp means; and
positioning means provided in said clamp means (102) so as to position said operating body at a normal-use position,
**characterized in that**
a tip end of the handle (8, 94) is provided with a longitudinal groove (GL) and a circumferential groove (GR) connected to the longitudinal groove (GL),
wherein said grooves (GL, GR) are adapted for engaging the positioning means, and
wherein the circumferential groove (GR) extends in the circumferential direction over an angle (α) of about 180°.

2. A bicycle according to claim 1, wherein said clamp means (102) is constituted to be fittable and detachable in the longitudinal direction of said handle (8, 94), at a position where said clamp means is turned by the angle (α) from said normal-use position of said operating body in the circumferential direction of said handle.

3. A bicycle according to claim 1 or 2, wherein
said clamp means (102) comprises a sleeve (110a) fitted over said handle (8, 94), and
said cam mechanism portion (110b, 103, 104, 105) and a handle grip (113) are integrated with said sleeve (110a).

4. A bicycle comprising:
a handle (8, 94);
an operating body comprising an operating lever (122) detachably fitted to the handle (8, 94) and a wire (832) operated by said operating lever (122);
clamp means (121) fastening and fixing said operating body to said handle (8, 94);
a cam mechanism portion (124, 125) for opening and closing said clamp means (121); and
positioning means (121d) provided in said clamp means (121) so as to position said operating body at a normal-use position,
**characterized in that**
said clamp means (121) comprises split halves (121a, 121b) openably and closably coupled to each other by a hinge (123), and an opening portion (124) located on the opposite side of said hinge portion (123) and fastened by said cam mechanism portion (124, 125), whereby said clamp means is fixed to said handle (8, 94)
wherein the positioning means (121d) includes a projection (121d) fittable in an engaging hole (94a) provided in the handle (8, 94).

5. A bicycle according to any of the preceding claims, wherein
said vehicle body frame (2) comprises a front frame (22) on which said handle (8) is provided, and a rear frame (23) on which a rear wheel (WR) is provided;
said front frame and said rear frame are separatably connected to each other; and
said wire is either one of a wire (832) for operating a rear brake (10) fitted to said rear frame and a speed change gear wire (831).

## Patentansprüche

1. Fahrrad, umfassend:
einen Lenker (8, 94);
einen Betätigungskörper, welcher einen abnehmbar an dem Lenker (8, 94) angebrachten Betätigungshebel (111a) und ein durch den Betätigungshebel (111 a) betätigtes Kabel (832) umfasst;
Klemmmittel (102), welche den Betätigungskörper an dem Lenker (8, 94) feststellen und befestigen;
einen Nockenmechanismusabschnitt (110b, 103, 104, 105) zum Öffnen und Schließen der Klemmmittel und
Positioniermittel, welche in den Klemmmitteln (102) vorgesehen sind,
um den Betätigungskörper in einer Normalverwendungsstellung zu positionieren,
**dadurch gekennzeichnet, dass**
ein Außenende des Lenkers (8, 94) mit einer Längsnut (GL) und einer mit der Längsnut (GL) verbundenen Umfangsnut (GR) versehen ist,
wobei die Nuten (GL, GR) dafür eingerichtet sind, mit den Positioniermitteln in Eingriff zu treten, und
wobei die Umfangsnut (GR) sich in Umfangsrichtung über einen Winkel (α) von ungefähr 180° Grad erstreckt.

2. Fahrrad nach Anspruch 1, bei welchem die Klemmmittel (102) so ausgebildet sind, dass sie in der Längsrichtung des Lenkers (8, 94) anbringbar und abnehmbar sind, und zwar in einer Stellung, in der die Klemmmittel um den Winkel (α) aus der Normalverwendungsstellung des Betätigungskörpers in Umfangsrichtung des Lenkers gedreht sind.

3. Fahrrad nach Anspruch 1 oder 2, in welchem
die Klemmmittel (102) eine Hülse (110a) umfassen, die über den Lenker (8, 94) geschoben ist, und
der Nockenmechanismusabschnitt (110b, 103, 104, 105) und ein Handgriff (113) mit der Hülse (110a) integriert sind.

4. Fahrrad, umfassend:
einen Lenker (8, 94);
einen Betätigungskörper, welcher einen abnehmbar an dem Lenker angebrachten Betätigungshebel (122) und ein durch den Betätigungshebel (122) betätigtes Kabel (832) umfasst;
Klemmmittel (121), welche den Betätigungskörper an dem Lenker (8, 94) feststellen und befestigen;
einen Nockenmechanismusabschnitt (124, 125) zum Öffnen und Schließen der Klemmmittel (121) und
Positioniermittel (121d), welche in den Klemmmitteln (121) vorgesehen sind, um den Betätigungskörper in einer Normalverwendungsstellung zu positionieren,
**dadurch gekennzeichnet, dass**
die Klemmmittel (121) Teilhälften (121a, 121b) umfassen, welche durch ein Scharnier (123) so miteinander gekoppelt sind, dass sie geöffnet und geschlossen werden können, und einen Öffnungsabschnitt (124) umfassen, der sich auf der dem Scharnierabschnitt (123) gegenüberliegenden Seite befindet und durch den Nockenmechanismusabschnitt (124, 125) festgestellt wird, wobei die Klemmmittel an dem Lenker (8, 94) befestigt sind,
wobei die Positioniermittel (121d) einen Vorsprung (121d) umfassen, der in ein in dem Lenker (8, 94) vorgesehenes Eingriffsloch (94a) einsetzbar ist.

5. Fahrrad nach einem der vorhergehenden Ansprüche, in welchem der Rahmen (2) des Fahrzeugkörpers einen vorderen Rahmen (22), an welchem der Lenker (8) vorgesehen ist, und einen hinteren Rahmen (23), an welchem ein Hinterrad (WR) vorgesehen ist, umfasst,
wobei der vordere Rahmen und der hintere Rahmen trennbar miteinander verbunden sind, und
wobei das Kabel entweder ein Kabel (832) zum Betätigen einer an dem hinteren Rahmen angebrachten hinteren Bremse (10) oder ein Gangschaltkabel (831) ist.

## Revendications

1. Bicyclette comprenant :
une poignée (8, 94) ;
un corps de fonctionnement comprenant un levier de commande (111a) monté de manière amovible sur la poignée (8, 94) et un câble (832) actionné par ledit levier de commande (111a) ;
des moyens de serrage (102) destinés à assujettir et à fixer ledit corps de fonctionnement sur ladite poignée (8, 94) ;
une partie de mécanisme à came (110b, 103, 104, 105) destinée à ouvrir et à fermer lesdits moyens de serrage ; et
des moyens de positionnement disposés dans lesdits moyens de serrage (102) de manière à positionner ledit corps de fonctionnement dans une position d'utilisation normale ;
**caractérisée en ce que** :
une extrémité de pointe de la poignée (8, 94) comporte une gorge longitudinale (GL) et une gorge en circonférence (GR) reliée à la gorge longitudinale (GL),
dans laquelle lesdites gorges (GL, GR) sont adaptées pour s'engager avec les moyens de positionnement,
dans laquelle la gorge en circonférence (GR) s'étend dans la direction de la circonférence sur un angle (α) d'environ 180°.

2. Bicyclette selon la revendication 1, dans laquelle lesdits moyens de serrage (102) sont constitués de manière à pouvoir être montés et être amovibles dans la direction longitudinale de ladite poignée (8, 94), dans une position dans laquelle lesdits moyens de serrage tournent de l'angle (α) à partir de ladite position d'utilisation normale dudit corps de fonctionnement dans la direction de la circonférence de ladite poignée.

3. Bicyclette selon la revendication 1 ou la revendication 2, dans laquelle :
lesdits moyens de serrage (102) comprennent un manchon (110a) monté sur ladite poignée (8, 94) ; et
ladite partie de mécanisme à came (110b, 103, 104, 105) et une prise de poignée (113) sont intégrées audit manchon (110a).

4. Bicyclette comprenant :
une poignée (8, 94) ;
un corps de fonctionnement comprenant un levier de commande (122) monté de manière amovible sur la poignée (8, 94) et un câble (832) actionné par ledit levier de commande (122) ;
des moyens de serrage (121) destinés à assujettir et à fixer ledit corps de fonctionnement sur ladite poignée (8, 94) ;
une partie de mécanisme à came (124, 125) destinée à ouvrir et à fermer lesdits moyens de serrage (121) ; et
des moyens de positionnement (121d) disposés dans lesdits moyens de serrage (121) de manière à positionner ledit corps de fonctionnement dans une position d'utilisation normale ;
**caractérisée en ce que** :
lesdits moyens de serrage (121) comprennent des moitiés fendues (121a, 121b) pouvant s'ouvrir et se fermer accouplées l'une à l'autre au moyen d'une articulation (123), et une partie d'ouverture (124) située sur le côté opposé de ladite partie d'articulation (123) et assujettie par ladite partie de mécanisme à came (124, 125), grâce à laquelle lesdits moyens de serrage sont fixés sur ladite poignée (8, 94),
dans laquelle les moyens de positionnement (121d) comprennent une saillie (121d) pouvant être montée dans un orifice d'engagement (94a) aménagé dans la poignée (8, 94).

5. Bicyclette selon l'une quelconque des revendications précédentes, dans laquelle :
ledit cadre de corps de véhicule (2) comprend un cadre avant (22) sur lequel est montée ladite poignée (8), et un cadre arrière (23) sur lequel est montée une roue arrière (WR) ;
ledit cadre avant et ledit cadre arrière étant connectés l'un à l'autre de manière amovible ; et
ledit câble est l'un ou l'autre d'un câble (832) destiné à actionner un frein arrière (10) monté sur ledit cadre arrière et d'un câble de changement de vitesse (831).
